# EUROPEAN PATENT APPLICATION

(11) **EP 2 009 573 A1**
(43) Date of publication of application: **31.12.2008**
(21) Application number: 08006104.7
(22) Date of filing: 28.03.2008
(51) Int. Cl.: G06K 7/00

(54) **System and method for optimizing communication between an rfid reader and an rfid tag**

(30) Priority: 30.03.2007 US 908999 P; 26.03.2008 US 56098
(71) Applicant: Skyetek, Inc, Westminster, Colorado 80020 (US)
(72) Inventor: Bruns, Logan, Napa, CA 94559 (US); Chakraborty, Sayan, Niwot, Colorado 80503 (US)
(74) Representative: Hughes, Andrea Michelle

(57) **Abstract**

A method for optimizing communication between an RFID reader 105 and an RFID 101 tag. Initially, an RFID tag is detected, and the tag type is passively determined. An optimization goal is then selected. An optimal parameter set for communicating with the tag, based on the tag type and the optimization goal is then determined. The reader is then reconfigured using the optimal parameter set to communicate with the tag.

## Description

### BACKGROUND

Each different type of RFID tag has associated therewith one or more applicable industry standards which dictate nominal operating parameters that are to be used by an RFID reader which reads the tag. These industry-standard parameters, however, do not provide optimum RFID reader-to-tag communications for all implementation scenarios and environmental conditions. A method which yields optimal communication between the reader and tag, as a function of a specific set of operational requirements, is thus desirable. The present invention provides a method and system as defined by the independent claims

### BRIEF DESCRIPTION OF THE DRAWINGS

**Figure 1** shows an exemplary RFID reader;

**Figure 2** is a flowchart showing an exemplary method for RFID reader optimization; and

**Figure 3** is a flowchart showing the method of Figure 2 in greater detail.

### DETAILED DESCRIPTION

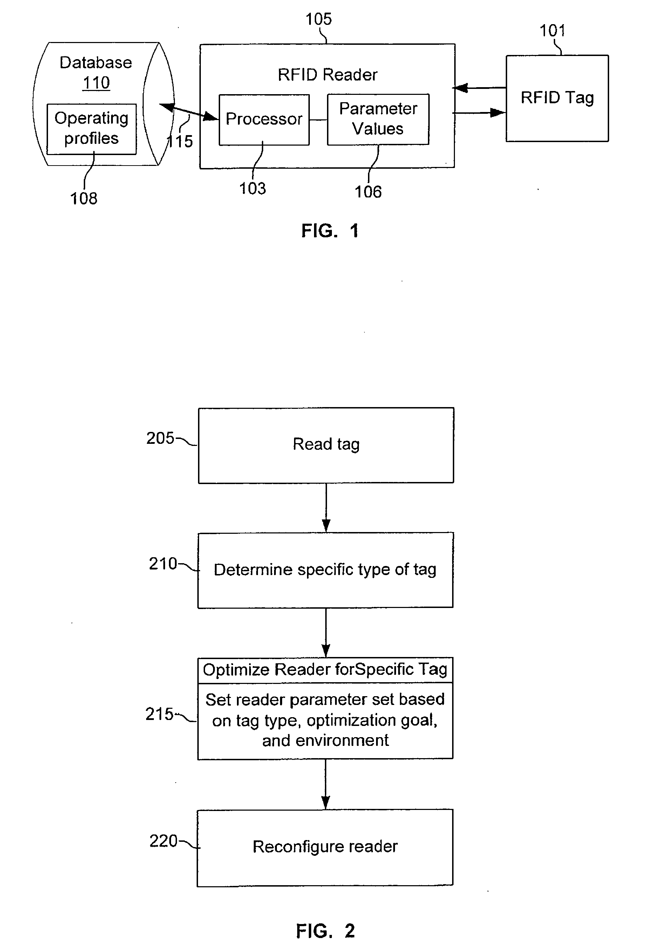

**Figure 1** shows one exemplary RFID reader 105 with a processor 103 and stored RFID tag parameters 106 for communicating with an RFID tag 101 to determine the type of the tag and optimizing the RFID reader's behavior based upon the determined RFID tag type. Unless otherwise noted, processor 103 executes and/or controls the functions performed in implementing the present method. RFID reader 105 is coupled to a tag identification database 110, which is either integral with the reader or accessed via an online connection 115.

In one exemplary method, as shown in **Figure 2**, at step **205**, RFID reader 105 reads a tag 101. At step **210,** reader 105 determines the exact type of tag 101 (including tag characteristics such as silicon manufacturer, version, and aspect of the inlay) with which it is communicating. At step **215,** processor 103 retrieves stored parameters 106 associated with the tag 101. Reader parameters to be employed specifically for communication with tag 101 are determined based on factors including tag type, optimization goal, and/or environmental conditions.

At step **220,** processor 103 reconfigures the reader to adjust the reader's behavior to provide optimal performance with that specific tag or type of tag. The retrieved parameters 106 are utilized for reconfiguring the reader rather than a nominal standard set of parameters for a generic tag. Even if the exact type of tag cannot be determined, knowledge of the general group to which a particular tag belongs allows a subset of possible optimizations to be determined.

In general, keeping parameters 106 within the range specified in a particular standard allows for the most flexibility in tag implementation and reader compatibility. However, a given tag implementation may accept a wider range of operating values that may allow for the use of operating values that would cause problems for other tags but which enhances performance for a particular tag family. For example, the ISO14443 standard specifies a modulation index range for type B operation that should be adhered to for the entire operating volume. This is to ensure maximum compatibility across readers and to enable more tag implementation options.

The modulation index as induced on a tag antenna tends to decrease as a function of distance from the reader antenna. The result is that setting the reader modulation depth such that the modulation index is valid from the minimum distance constrains the read distance to the point where modulation index becomes too small for the tag to be reliably detected. If it is known that a given tag can tolerate a deeper modulation, then in some cases a greater range can be achieved by using a modulation index which is deeper at closer ranges than that specified by the applicable standard.

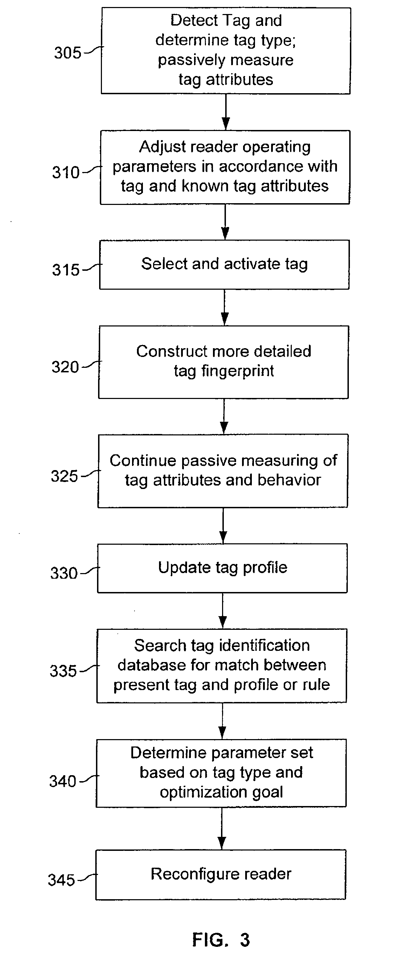

**Figure 3** is a flowchart illustrating the method of Figure **2** in greater detail, indicating an exemplary operational method used at run time by an RFID reader 105 to optimize reader parameters 106. Initially, at step **305,** a tag 101 is detected. The type of tag being read is then initially determined by examining the tag identifier. Knowledge of deployed tag implementations for a given application may also be used to identify the type of tag or by tag family (e.g., if only one UHF class 1 gen 2 tag implementation is deployed for a particular application, then if the application employs only class 1 gen 2, then that specific tag implementation is assumed). Optionally, passive measuring of the tag attributes may be performed during the process of detecting the tag to determine the tag implementation or IC type.

Optionally, at step **310,** RFID reader operating parameters 106 are adjusted in accordance with the tag implementation and known characterization of the tag attributes.

In step 310, operating parameters 106 are perturbed slightly to help characterize the tag in the case of newly encountered tag implementation (which has been recognized by a previously constructed tag fingerprint, as in step 320, described below).

At step **315,** the tag is selected and activated. Additional passive measuring of the tag attributes may be performed at this point if the tag implementation or tag IC type has yet to be determined.

Optionally, at step **320,** a more detailed tag fingerprint may be constructed If the present tag implementation is not recognized. Depending on reader configuration, a tag fingerprint for a new tag implementation may be constructed and recorded. The tag fingerprint may be solely constructed from measured attributes recorded during steps 305 and 310 or it may involve additional, active, probing of the tag. (e.g., distorting frames and noting the specific point of failure).

Tag protocols are then engaged and tag operations are performed normally according to higher level applications' needs. Optionally, at step **325,** passive measuring of tag attributes and behavior may continue. This is performed in the case when tag implementation is not known to the reader and thus has not been previously well characterized, for example, if step 320 has been performed either in this tag/reader interaction or in a previous interaction.

The tag is then deactivated during tag removal procedure. Optionally, at step **330,** the characterization of tag implementation, or tag profile, for the specific tag or tag type is updated based on the measured behavior. This is the case when steps 325 and/or 310 have been performed. An example for UHF tags includes responsiveness of the tag implementation during frequency hopping at specific frequencies. Examples for HF tags with respect to step 310 may be overall performance after a minor adjustment to effective modulation index for 14443B or effective Q value after adjusting overall conductance value by a small step.

To support the operation described above, the tag identification database 110 is maintained for the purposes of both identifying tag implementations and applying operating profiles 108 that contain sets of RFID reader operating parameters, including specific tag fingerprints and general seed profile rules. Multiple tag implementations may point to the same operating profile. Likewise, matching some tag attributes but enough to fully identify a specific tag implementation may lead to the selection of a starting profile that would then be forked off to use as the basis of a new profile for the newly encountered tag implementation.

At step **335,** a search against database 110 is performed, using the presently available tag attributes. This search provides either a match for a specific tag fingerprint or for a general seed profile rule. In the case where a tag matches a specific tag fingerprint then the corresponding specific tag profile is used for reconfiguring the RFID reader. In the case where the tag matches a general seed profile rule then the seed profile is used.

Additionally, a newly encountered tag implementation's fingerprint is added to the tag identification database 110 referencing a cloned or forked version of the corresponding tag seed profile. The newly cloned/forked profile is updated over time as indicated in step 330. Optionally, instead of matching a specific predetermined profile for a given tag fingerprint rule, alternatives that facilitate various optimization goals may be employed. Examples of optimization goals include tag range, anti-collision effectiveness, noise tolerance, transaction speed, and communication reliability.

Database 110 may be bundled with the RFID reader 105 or accessed via online connection 115. Database updates made remotely may be applied to the reader's copy of the database. Likewise, updates to the reader's database copy may be distributed to other readers in a network and/or to a central reference copy. For example, a facility may deploy a new tag implementation in which the tag readers develop an optimization profile and tag fingerprint for a tag that may be distributed to other facilities prior to their roll-out of a new tag. Alternatively, a tag may be characterized using more active probing of the tag or manual tuning. A tag fingerprint and profile may be published to other readers in a system to be used for the tag. The latter fingerprint / profile may then supersede the initial tag implementation.

### Determining the Exact Type of Tag

One or more of the techniques described in Table 1, below, may be used to determine the specific tag type, as indicated at steps 305, 320, and 325, in Figure 3. The techniques are typically executed via a search tree to progressively further classify the tag. Other techniques appropriate to newly developed RFID chips and protocols may also be utilized.

### TABLE 1

■ using different frequencies to determine if the tag inlay is a multifrequency inlay (e.g., 868 and 915), an LF, HF, Microwave, or UHF tag, or a combination tag (e.g., HF+UHF)
■ using different protocols to determine which protocols the tag supports (more than one protocol may be supported)
■ reading manufacturer's code and/or other manufacturer-specific data from the tag
■ using different commands to determine which command set the tag supports
■ accessing different memory regions to determine how much memory the tag has
■ determining the encryption/security features the tag supports
■ determining the application spaces and types the tag supports
■ observing EAS response for tags that support EAS
■ observing supported data rates up and down and capabilities for 14443-4 compliant cards
■ determining anticollision methods including both supported anticollision methods and cascade levels for 14443-A
■ determining both command execution times and response times of certain commands
■ using different parity / CRC techniques.
■ checking default security keys
■ checking SOF and /or EOF encoding (this is usually by air interface but the technique can be employed to determine proprietary protocol tags)
■ employing general fault injection techniques to distinguish tags based on differences in how they handle error conditions or what range of values they can accept. These techniques can range from distortions of the low level bit encodings in the air interface (between reader and tag) to changes in timing (too fast or too slow) or parameter/protocol values, or combinations of thereof. The manner in which the tag response changes under a particular type of distortion is observed, thus allowing a determination of a tag's characteristics, from which the tag type may be inferred.

The above techniques may be reordered to increase the efficiency of the method used for identifying the tag type and thus minimize tag-type search time. This reordering process can include dynamically adjusting the order and/or tests run based on the results of previous tests (i.e., since 15693-type tags do not support 14443-4 features, those tests can be avoided entirely).

### Optimizing Reader Operation for the Exact Tag

A tag 101 may have multiple profiles 108 associated therewith, each of which defines a set of reader operating parameters 106 which a reader may use depending on the reader function or characteristic being optimized (range versus anti-collision versus maximum reliability, for example) or as a function of the environment (e.g., high noise versus low noise).

As indicated in Figure 3, at step **340,** a set of parameters 106 is determined based on the determined tag type, the optimization goal, and optionally, environmental factors. Once a set of operating parameters 106 is selected, the reader is reconfigured using that parameter set, at step **345.** This reconfiguration may include performing one or more of the actions indicated in Table 2, below:

### TABLE 2

■ adjusting modulation depth/modulation index
■ adjusting transmit power level
■ adjusting modulation scheme
■ adjusting command timing
■ adjusting encoding scheme
■ adjusting data rates
■ adjusting anti-collision parameters
■ adjusting hardware filtering or software filtering of the received data. For example, if it is known that the first byte should be E0, errors can be ignored or corrected.
■ choosing an optimized sampling algorithm or preamble detect algorithm
■ optimizing the I or the Q channel
■ adjusting SOF and /or EOF bit periods
■ adjusting the allowed frequency hop ranges
■ adjusting frame size in either or both directions
■ adjusting minimum and maximum wait times after some protocol actions

While preferred embodiments of the disclosed subject matter have been described, so as to enable one of skill in the art to practice this subject matter, the preceding description is intended to be exemplary only, and should not be used to limit the scope of the disclosure, which should be determined by reference to the following claims.

## Claims

1. A method for optimizing communication between an RFID reader (105) and an RFID tag (101) comprising:
detecting the tag;
passively determining a tag type for the tag;
selecting an optimization goal;
determining an optimal parameter set (106) for communicating with the tag, based on the tag type and the optimization goal; and
reconfiguring the reader using the optimal parameter set to communicate with the tag.

2. The method of claim 1, wherein the optimization goal is selected from the set of goals consisting of tag range, anti-collision effectiveness, noise tolerance, transaction speed, and communication reliability.

3. The method of claim 1, further including adjusting reader operating parameters in accordance with the tag and known tag attributes.

4. The method of claim 1, further including constructing a tag fingerprint using measured attributes determined from passive inspection of the tag.

5. The method of claim 1, further including constructing a tag fingerprint by actively probing the tag.

6. The method of claim 1, further including:
searching a tag identification database (110) for a match between the tag and a profile/rule including reader operating parameters; and
reconfiguring the RFID reader, using a corresponding specific tag profile when a tag matches a specific tag fingerprint in the database, except when the tag matches a general seed profile rule in the database, then using a general seed profile rule.

7. The method of claim 6, wherein the reader operating parameters include specific tag fingerprints and general seed profile rules.

8. A system for optimizing communication between an RFID reader and an RFID tag comprising:
an RFID reader (105) for communicating with the tag (101));
RFID reader operating parameters (016) stored in the reader; and
a database in which is stored multiple sets of RFID reader operating profiles (108);
wherein the system is configured to:
determine the tag type of the tag;
select an optimization goal;
determine an optimal parameter set for communicating with the tag based on the tag type and the optimization goal; and
reconfigure the reader using the optimal parameter set to communicate with the tag.

9. The system of claim 8, wherein the optimization goal is selected from the set of goals consisting of tag range, anti-collision effectiveness, noise tolerance, transaction speed, and communication reliability.

10. The system of claim 8, further wherein the system is configured to adjust reader operating parameters in accordance with the tag and known tag attributes.

11. The system of claim 8, further wherein the system is configured to construct a tag fingerprint using measured attributes determined from passive inspection of the tag.

12. The system of claim 8, further wherein the system is configured to construct a tag fingerprint by actively probing the tag.

13. The system of claim 8, further wherein the system is configured to:
search a tag identification database (110) for a match between the tag and a profile/rule including reader operating parameters; and
reconfigure the RFID reader, using a corresponding specific tag profile when a tag matches a specific tag fingerprint in the database, except when the tag matches a general seed profile rule in the database, then using the general seed profile rule.

14. The system of claim 13, wherein the reader operating parameters include specific tag fingerprints and general seed profile rules.
